# EUROPEAN PATENT APPLICATION

(11) **EP 4 647 901 A1**
(43) Date of publication of application: **12.11.2025**
(21) Application number: 25175159.0
(22) Date of filing: 08.05.2025
(51) Int. Cl.: G06F 9/38

(54) **MULTI-INSTRUCTION PACKAGING IN SINGLE INSTRUCTION SLOT**

(30) Priority: 10.05.2024 US 202418660925
(71) Applicant: Google LLC, Mountain View, CA 94043 (US)
(72) Inventor: HUANG, Andrew, Mountain View, 94043 (US); GOKHALE, Vinayak Anand, Austin, 78739 (US); NAGARAJAN, Rahul, San Jose, 95130 (US)
(74) Representative: Betten & Resch

(57) **Abstract**

Aspects of the disclosure are directed to a multi-instruction packing system to allow for the parallel processing of two or more operations in a single hardware execution unit, such as an (ALU), such as for processing of very long instruction word (VLIW) instructions. The multi-instruction packing system can extract operation codes (opcodes) from an instruction to determine a first operation. After determining the first operation, the multi-instruction packing system can determine a second operation that may utilize one of the remaining data paths of the ALU, excluding the data path to execute the first operation. Once the second operation is determined, the multi-instruction packing system can assign the first and second operations to the same ALU slot and allows the first and second operations to be executed in parallel by the ALU.

## Description

### BACKGROUND

Very long instruction word (VLIW) instructions are longer versions of regular instructions that allow processors to specify and execute multiple operations in parallel. However, VLIW instructions can pose challenges for hardware execution units, particularly arithmetic logic units (ALUs). Each hardware execution unit can include multiple data paths to execute various operations. However, the hardware execution units typically utilize a single data path for each operation in an execution cycle, resulting in underutilization of the remaining resources. Such underutilization can result in performance bottlenecks, especially when VLIW instructions are used for extensive workloads, such as for serving large language models.

### BRIEF SUMMARY

Aspects of the disclosure are directed to a multi-instruction packing system to allow for the parallel processing of two or more operations in a single hardware execution unit, such as an arithmetic logic unit (ALU), such as for processing of very long instruction word (VLIW) instructions. The multi-instruction packing system can extract operation codes (opcodes) from an instruction to determine a first operation. After determining the first operation, the multi-instruction packing system can determine a second operation that may utilize one of the remaining data paths of the ALU, excluding the data path to execute the first operation. Once the second operation is determined, the multi-instruction packing system can assign the first and second operations to the same ALU slot, allowing the first and second operations to be executed in parallel by the ALU. The implementation of a multi-instruction packing system can execute two or more operations using the same ALU slot in the processing of instructions, resulting in more efficient processing and less memory usage.

An aspect of the disclosure provides for a system including one or more processors and one or more storage devices coupled to the one or more processors, the one or more processors configured to: receive an instruction comprising one or more slots; determine a first operation for a first slot; determine a second operation for the first slot based on the first operation; assign the second operation to the first slot by specifying a second operation code corresponding to the second operation; and encode the instruction with the first operation code and the second operation code.

In an example, the first slot comprises the first operation code and one or more operands related to the first operation. In another example, the one or more operands related to the first operation are independent of one or more operands related to the second operation.

In yet another example, specifying the second operation code comprises adding an additional field for the second operation code to the first slot.

In yet another example, the first slot corresponds to an execution unit. In yet another example, the execution unit executes the first operation and the second operation in parallel.

In yet another example, the one or more processors are configured to determine the second operation based on a pairing list of operations. In yet another example, the pairing list of operations comprises a list of primary operations paired with secondary operations that do not conflict with the primary operations.

In yet another example, the one or more processors are configured to determine the first slot for executing the first operations and the second operations in parallel. In yet another example, the second operation is determined by identifying an execution condition of the second operation.

Another aspect of the disclosure provides for a method for multi-instruction packing, the method including: receiving, by one or more processors, an instruction comprising one or more slots; determining, by one or more processors, a first operation for a first slot; determining, by one or more processors, a second operation for the first slot based on the first operation; assigning, by one or more processors, the second operation to the first slot by specifying a second operation code corresponding to the second operation; and encoding, by one or more processors, the instruction with the first operation code and the second operation code.

In an example, the first slot comprises the first operation code and one or more operands related to the first operation. In another example, the one or more operands related to the first operation are independent of one or more operands related to the second operation.

In yet another example, specifying the second operation code comprises adding an additional field for the second operation code to the first slot.

In yet another example, the first slot corresponds to an execution unit. In yet another example, the execution unit executes the first operation and the second operation in parallel.

In yet another example, the one or more processors are configured to determine the second operation based on a pairing list of operations. In yet another example, the pairing list of operations comprises a list of primary operations paired with secondary operations that do not conflict with the primary operations.

In yet another example, the second operation is determined by identifying an execution condition of the second operation.

Yet another aspect of the disclosure provides for storing instructions that, when executed by one or more processors, cause the one or more processors to perform operations for multi-instruction packing, the operations including: receiving an instruction comprising one or more slots; determining a first operation for a first slot; determining a second operation for the first slot based on the first operation; assigning the second operation to the first slot by specifying a second operation code corresponding to the second operation; and encoding the instruction with the first operation code and the second operation code.

### BRIEF DESCRIPTION OF THE DRAWINGS

FIG. 1 depicts a block diagram of an example multi-instruction packing according to aspects of the disclosure.
FIG. 2 depicts a block diagram of an example multi-instruction packing system according to aspects of the disclosure.
FIG. 3 depicts a block diagram of an example instruction format according to aspects of the disclosure.
FIG. 4 depicts a block diagram of an example environment for implementing a multi-instruction packing system according to aspects of the disclosure.
FIG. 5 depicts a flow diagram of an example process for multi-instruction packing in an instruction slot according to aspects of the disclosure.

### DETAILED DESCRIPTION

The technology relates generally to enhancing the utilization of resources within a hardware execution unit, such as the arithmetic logic unit (ALU), when processing instructions, like very long instruction word (VLIW) instructions. Enhancing the utilization of resources of a hardware execution unit can include identifying underutilized resources of an ALU and scheduling additional operations to an ALU slot by adding an operation code (opcode) extracted from the instructions.

An ALU can include multiple data paths for executing various operations. For example, the ALU data path can be a circuit that performs data processing operations and is made up of registers, multiplexers, decoders, and buses that allow data to flow between them. For each operation, typically only one of the data paths is used at a time. However, when two operations are non-conflicting and register file read operations fall within acceptable thresholds, the two operations can be assigned to the same ALU slot in an instruction and executed in parallel in one ALU.

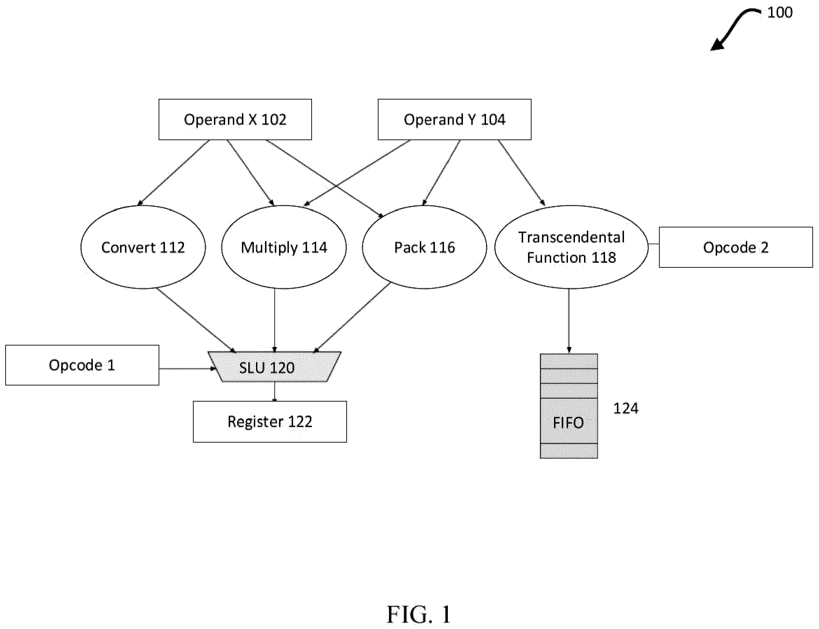

FIG. 1 depicts a block diagram of example multi-instruction packing 100. An instruction can include one or more ALU slots, each ALU slot having information for processing an operation, such as the opcode and operands that the corresponding ALU should process. An ALU can include a plurality of data paths for the different types of operations, such as convert 112, multiply 114, pack 116, and transcendental function 118. The ALU can execute the operation by selecting the appropriate data path for processing the operation based on the operation information specified by the ALU slot in the instruction.

Each operation can include source operands to be used for the operation and destination operands to store the result of the operation. For example, the convert 112 and transcendental function 118 operations each have one source operand, operand X 102 and operand Y 104 respectively, while the multiply 114 and pack 116 operations each require both source operands X 102 and Y 104.

An ALU slot may have a conversion operation 112 as the first operator. The conversion operation 112 has an opcode 1, one operand X 102, and a destination 122. The ALU corresponding to the ALU slot will be able to perform the convert operation 112 on operand X 102 and write the result to the destination 122. Further, the multi-instruction packing system can identify if there is a second operation utilizing an unused data path in the ALU from the instruction.

To select the second operation, the multi-instruction packing system can check the source and destination operations of each operation extracted from the slots in the instruction and identify that the operation does not cause a hardware conflict with the first operation, e.g., the convert operation 112. As a result, the second operation can be the transcendental function 118. The transcendental function 118 has an opcode 2, an operand Y 104, and the result is written to the designated location 124 after the corresponding operation 118 is performed. Since the source operand X and Y are used independently in each operation, and the destination operands 122 and 124 do not affect the operation of the other, a single ALU can execute the conversion operation 112 and the transcendental function operation 118 in parallel.

As another example, if the first operation should utilize two source operands and the source operand to be used for the second operation is the same as one of the two source operands of the first operation, the first and second operation can combine to the same ALU slot. This allows for better utilization of register ports since they are allocated to operands. By using different parts of the ALU resources and getting different results, two operations can be processed in parallel in one slot.

When the second operation is determined, the system can encode the instruction by adding an opcode and operands for the second operation to the ALU slot to which the first operation is assigned. The first operation and the second operation assigned to the same ALU slot may be executed in parallel in the same cycle of the ALU.

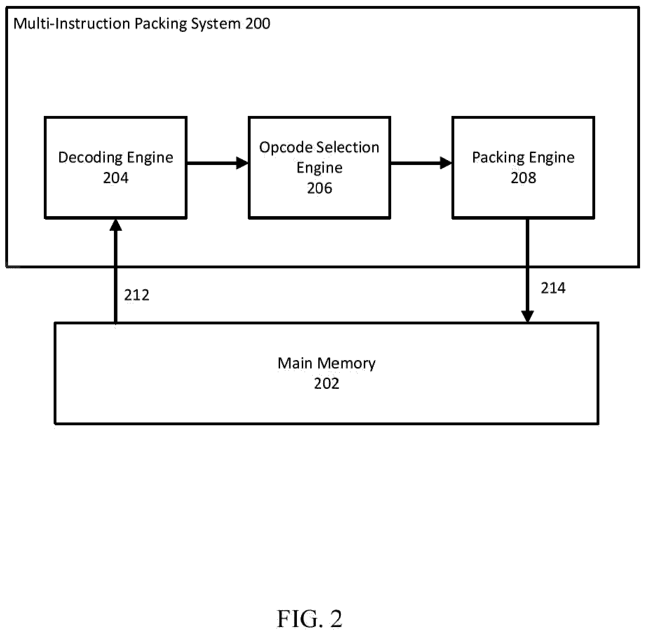

FIG. 2 depicts a block diagram of an example multi-instruction packing system 200. The multi-instruction packing system 200 can be implemented on one or more computing devices in one or more locations.

The multi-instruction packing system 200 can be configured to receive instructions 212 by fetching the instructions. The instructions 212 can also be provided to the multi-instruction packing system 200 through a storage medium, such as main memory 202, cache or instruction SRAM. For example, the instructions can be VLIW instructions.

From the instructions 212, the multi-instruction packing system 200 can be configured to output one or more results generated as output data 214. The output data 214 can include one or more operations to be processed by ALU. As another example, the multi-instruction packing system 200 can be configured to provide the output data 204 to the ALU as a set of computer-readable instructions including one or more operations. The multi-instruction packing system 200 can further be configured to store the output data 204 in the main memory 202. The stored data can be decoded and forwarded to ALU for execution.

The multi-instruction packing system 200 can include a decoding engine 204, an opcode selection engine 206 and a packing engine 208. The decoding engine 204, the opcode selection engine 206, and a packing engine 208 can be implemented as one or more computer programs, such as compilers, specially configured electronic circuitry, or any combination thereof.

The decoding engine 204 can be configured to decode the instruction fetched from the main memory 202. The decoding engine 204 can decode instructions into operations and extract opcodes from the instruction. The extracted opcodes can be placed into an ALU slot.

The opcode selection engine 206 can be configured to analyze the execution conditions for the extracted operations and determine a first operation and a second operation to be processed with the first operation by an ALU. For example, the opcode selection engine 206 can analyze the data dependencies of each operation and which data paths are utilized in executing the operation. To be processed with the first operation, the second operation should utilize a data path that does not conflict with the first operation. If there is at least one available data path and the second operation does not conflict with the first operation, the second operation can be selected as an operation to be executed simultaneously with the first operation on the same ALU. The first and second operations can be assigned to the same ALU slot of the instruction.

A packing engine 208 can be configured to encode an instruction for the first and second operations. A packing engine 208 can add an additional opcode field for the second operation to the same ALU slot by specifying the second opcode and relevant operands. The packing engine 208 then can store the packed instruction to the main memory 202 as output 214.

ALU can be configured to process the first and second opcodes based on the packing instruction. Before executing the packing instruction, the decoding unit of the hardware accelerator can verify that the allocated operations can be performed together on the same ALU. The decoding unit can decode the packed instruction and determine whether the allocated operations can be performed without any resource conflicts. When the decoding unit determines that the operations can be performed together, the decoding unit can transmit the decoded instruction to the ALU. The ALU can execute the first and second operations, allocating the corresponding data paths. Depending on the type of operations, various data paths and hardware resources are utilized to process the operations.

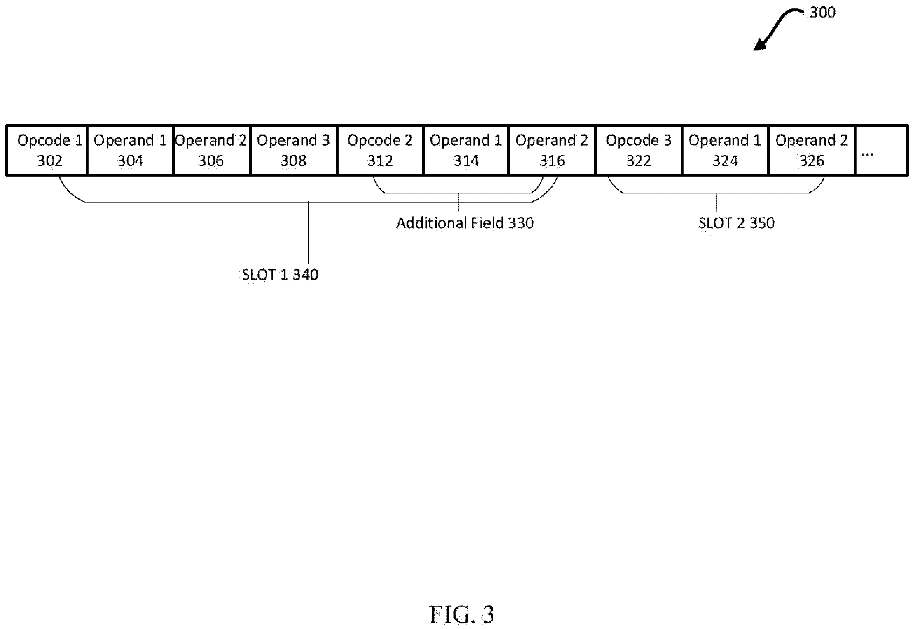

The output data 214 can follow the instruction format including the first opcode and the second opcode. FIG. 3 depicts a block diagram of an example instruction format 300 for executing the one or more operations. An instruction can include one or more slots such as slots 340 and 350. Each ALU slot can include one or more opcodes and one or more operands related to the opcodes. The opcode 302 assigned to SLOT 1 340 specifies the particular operation to be executed by an ALU. Various operations such as addition, subtraction, multiplication, and other logical operations can be represented by opcodes. For example, the opcode 302 can have one or more source operands and target operands for the opcode 302. Source operands 304 and 306 represent the input data that should be used for the opcode 302. These can be values that point to addresses in registers or memory. Typically, more than one source operands are included, where each operand can be used for different purposes depending on the operation. Destination operand 308 indicates where to store the result of the opcode 302. This is a value that points to an address in a register or memory for storing the result of the operation. Typically, one operation is assigned to one ALU slot.

The opcode selection engine 206 of the multi-instruction packing system 200 can identify opcode 302. The opcode selection engine 206 can identify the data path of the opcode 302 as well as relevant source and destination operands. Based on the identification, the opcode selection engine 206 can determine the second operation which will be able to use a different data path with the opcode 302. For example, the opcode selection engine 206 can have a list of secondary opcodes that can be paired with the opcode 302. Based on the list, opcode selection engine 206 can select a secondary opcode from the extracted opcodes. For example, the secondary opcode 312 is assigned to the SLOT 1 340 where the first opcode 302 is assigned. If there are one or more operands associated with the secondary opcode, the operands are also stored in the slot.

The packing engine 208 can encode an instruction including opcodes 302 and 312. For example, the packing engine 208 can add additional fields 330 for the second operation. The additional fields 330 can include opcode 312 as well as source operand 314 and destination operand 316. Through the instruction encoding, two operations 302 and 312 can be combined and assigned to the same SLOT 1 340.

The decoding unit of the hardware accelerator can detect an error condition before the instruction is passed to the ALU. The decoding unit can fetch the encoded instructions stored in memory and decode the instruction. The decoding unit can verify the operations assigned to the ALU to determine whether the assigned operations can be performed together on that ALU. If it is determined that the operations can be performed together, the decoding unit can transmit the decoded instruction to the ALU for execution.

The second operation may be selected by referring to a lookup table, such as a pairing list. Operations that read one source can be executed with secondary operations if the secondary operation also has one source operand. If a primary operation has two source operands, it can be processed with a secondary operation if the two source operands are not in the same register and the secondary operation has only one source operand.

Additional operation code fields may be added for two or more operations. If an operation exists that does not conflict with two operations and uses different data paths, the operations may be assigned to the same ALU slot. The multi-instruction packing system 200 can allocate the resources to be used for each operation and allocates the necessary data paths by specifying its type through an additional opcode field added to the ALU slot.

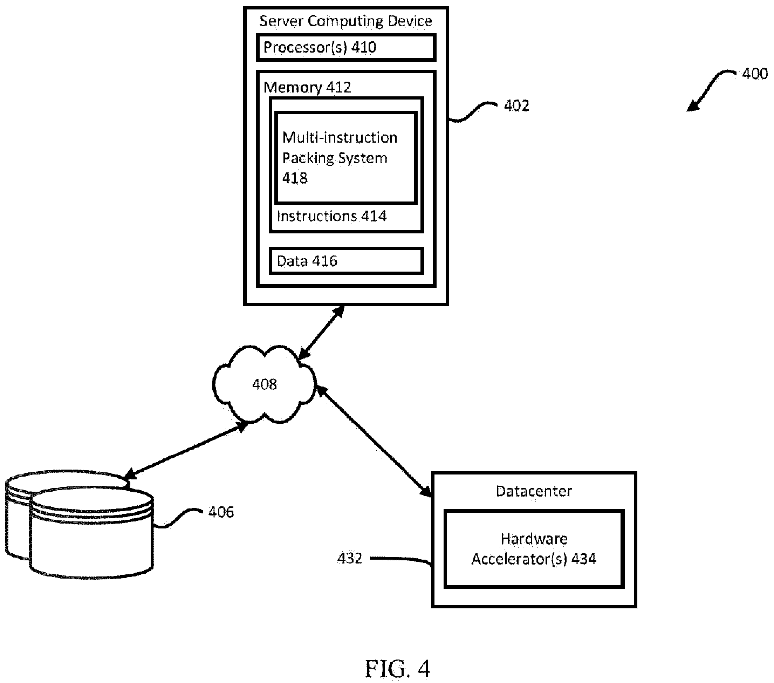

FIG. 4 depicts a block diagram of an example environment 400 for implementing a multi-instruction packing system 418. The multi-instruction packing system 418 can be implemented on one or more devices having one or more processors in one or more locations, such as in server computing device 402. The server computing device 402 can be communicatively coupled to one or more storage devices 406 over a network 408. The storage devices 406 can be a combination of volatile and non-volatile memory and can be at the same or different physical locations than the computing device 402. For example, the storage devices 406 can include any type of non-transitory computer readable medium capable of storing information, such as a hard-drive, solid state drive, tape drive, optical storage, memory card, ROM, RAM, DVD, CD-ROM, write-capable, and read-only memories.

The server computing device 402 can include one or more processors 410 and memory 412. The memory 412 can store information accessible by the processors 410, including instructions 414 that can be executed by the processors 410. The memory 412 can also include data 416 that can be retrieved, manipulated, or stored by the processors 410. The memory 412 can be a type of transitory or non-transitory computer readable medium capable of storing information accessible by the processors 410, such as volatile and non-volatile memory. The processors 410 can include one or more central processing units (CPUs), graphics processing units (GPUs), field-programmable gate arrays (FPGAs), and/or application-specific integrated circuits (ASICs), such as tensor processing units (TPUs) and/or wafer scale engines (WSEs).

The instructions 414 can include one or more instructions that, when executed by the processors 410, cause the one or more processors 410 to perform actions defined by the instructions 414. The instructions 414 can be stored in object code format for direct processing by the processors 410, or in other formats including interpretable scripts or collections of independent source code modules that are interpreted on demand or compiled in advance. The instructions 414 can include instructions for implementing a multi-instruction packing system 418, which can correspond to the multi-instruction packing system 200 as depicted in FIG. 2. The multi-instruction packing system 418 can be executed using the processors 410, and/or using other processors remotely located from the server computing device 402.

The data 416 can be retrieved, stored, or modified by the processors 410 in accordance with the instructions 414. The data 416 can be stored in computer registers, in a relational or non-relational database as a table having a plurality of different fields and records, or as JSON, YAML, proto, or XML documents. The data 416 can also be formatted in a computer-readable format such as, but not limited to, binary values, ASCII, or Unicode. Moreover, the data 416 can include information sufficient to identify relevant information, such as numbers, descriptive text, proprietary codes, pointers, references to data stored in other memories, including other network locations, or information that is used by a function to calculate relevant data.

Although FIG. 4 illustrates the processor 410 and the memories 412 as being within the computing device 402, components described herein can include multiple processors and memories that can operate in different physical locations and not within the same computing device. For example, some of the instructions 414 and the data 416 can be stored on a removable SD card and others within a read-only computer chip. Some or all of the instructions 414and data 416 can be stored in a location physically remote from, yet still accessible by, the processor 410. Similarly, the processor 410 can include a collection of processors that can perform concurrent and/or sequential operation. The computing device 402 can each include one or more internal clocks providing timing information, which can be used for time measurement for operations and programs run by the computing device 402.

The server computing device 402 can be connected over the network 408 to a data center 432 housing any number of hardware accelerators 434. The data center 432 can be one of multiple data centers or other facilities in which various types of computing devices, such as hardware accelerators, are located. Computing resources housed in the data center 432 can be specified for deploying a multi-instruction packing system as described herein.

The server computing device 402 can be configured to receive requests to process data on computing resources in the data center 432. For example, the environment 400 can be part of a computing platform configured to provide a variety of services to users, through various user interfaces and/or application programming interfaces (APIs) exposing the platform services. As an example, the variety of services can include natural language processing, anomaly detection, and/or audio, video, and/or image processing. The multi-instruction packing system 418 can receive the input data, and in response, generate output data including a response to the query for the particular task.

The server computing device 402 can maintain a variety of models in accordance with different constraints available at the data center 432. For example, the server computing device 402 can maintain different families for deploying models on various types of TPUs and/or GPUs housed in the data center 432 or otherwise available for processing.

The computing device 402 and the data center 432 can be capable of direct and indirect communication over the network 408. For example, using a network socket, the computing device 402 can connect to a service operating in the data center 432 through an Internet protocol. The computing device 402 can set up listening sockets that may accept an initiating connection for sending and receiving information. The network 408 can include various configurations and protocols including the Internet, World Wide Web, intranets, virtual private networks, wide area networks, local networks, and private networks using communication protocols proprietary to one or more companies. The network 408 can support a variety of short- and long-range connections. The short- and long-range connections may be made over different bandwidths, such as 2.402 GHz to 2.480 GHz, commonly associated with the Bluetooth^{®} standard, 2.4 GHz and 5 GHz, commonly associated with the Wi-Fi^{®} communication protocol; or with a variety of communication standards, such as the LTE^{®} standard for wireless broadband communication. The network 408, in addition or alternatively, can also support wired connections between the device 402 and the data center 432, including over various types of Ethernet connection.

Although a single server computing device 402 and data center 432 are shown in FIG. 4, it is understood that the aspects of the disclosure can be implemented according to a variety of different configurations and quantities of computing devices, including in paradigms for sequential or parallel processing, or over a distributed network of multiple devices. In some implementations, aspects of the disclosure can be performed on a single device connected to hardware accelerators configured for processing machine learning models, or any combination thereof.

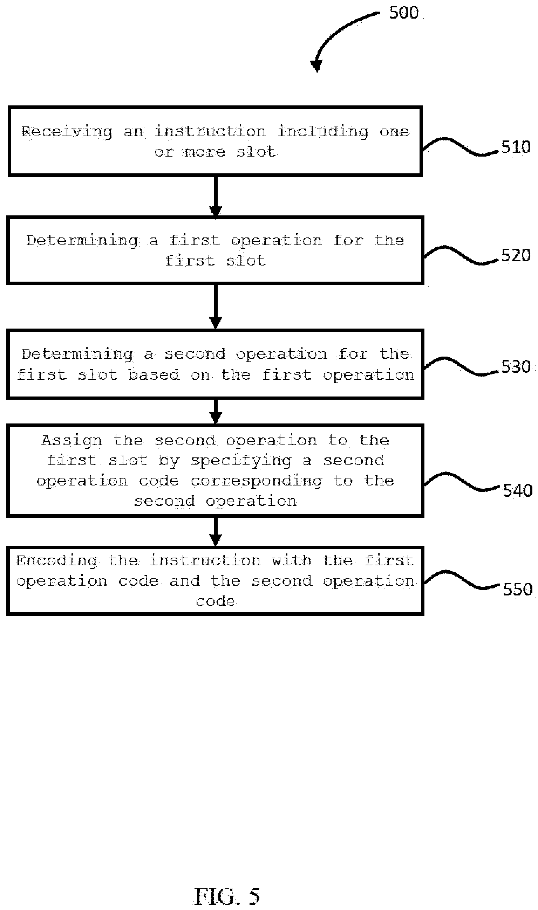

FIG. 5 depicts a flow diagram of an example process 500 for a multi-instruction packing system, such as the multi-instruction packing system 200 as depicted in FIG. 2. The example process can be performed on a system of one or more processors in one or more locations, such as on the server computing device 400 as depicted in FIG. 4.

As shown in block 510, the multi-instruction packing system 200 receives an instruction by fetching the instruction from a storage medium. The instruction can include one or more slots corresponding to respective execution units such as ALUs. The multi-instruction packing system 200 extracts one or more opcodes by decoding the one or more slots. Each of decoded one or more slots includes an opcode and relevant operands.

As shown in block 520, the multi-instruction packing system 200 determines the first operation for the first slot. The multi-instruction packing system 200 identifies the extracted opcodes to determine the first operation.. Based on the data paths and associated operands that should be used to execute the operations of the extracted opcodes, the multi-instruction packing system 200 checks for dependencies between the extracted opcodes to determine if there are operations that can be executed independently. If there is an operation that satisfies the conditions, the multi-instruction packing system 200 determines the operation as a first operation.

As shown in block 530, the multi-instruction packing system 200 determines a second operation for the first slot based on the first operation. The second operation can be determined from the one or more extracted opcodes of the one or more slots. The multi-instruction packing system 200 determines the second operation by selecting an operation that can use one or more unused data paths and does not conflict with the first operation. The multi-instruction packing system 200 checks the operands of the first operation and the candidate second operations and selects a non-conflicting operation as the second operation. The second operation may be selected by referring to a lookup table, such as a pairing list. If the source operands of the primary and secondary operators are one each and are located in different locations, and the results of each operation do not affect the other, the two operators can be processed together on one ALU. However, if an operator has more than one source operand and the results of the operations depend on each other, the two operators cannot be processed together.

As shown in block 540, the multi-instruction packing system 200 assigns the second operation to the first slot by specifying a second operation code corresponding to the second operation. The multi-instruction packing system 200 adds the additional field for the second operation to specify the opcode and operands to the first slot where the first operation is assigned. The first slot may be the slot to which the first operation was originally assigned, but may also be newly designated as a slot optimized for execution with the second operation.

As shown in block 550, the multi-instruction packing system 200 encodes the instruction with the first operation code and the second operation code. After encoding the instruction with the first opcode and the second opcode, the encoded instruction is stored in the memory.

The decoding unit of the hardware accelerator fetches the encoded instructions stored in memory and decodes the instruction. The decoding unit verifies the operations assigned to the ALU to determine whether the assigned operations can be performed together on that ALU. If it is determined that the operations can be performed together, the decoding unit transmits the decoded instruction to the execution unit for execution.

The execution unit executes the first and second operations in parallel. The first slot allocates the resources and the data paths for each operation when multiple operations are executed in parallel in the same ALU.

Aspects of this disclosure can be implemented in digital electronic circuitry, in tangibly embodied computer software or firmware, and/or in computer hardware, such as the structure disclosed herein, their structural equivalents, or combinations thereof. Aspects of this disclosure can further be implemented as one or more computer programs, such as one or more modules of computer program instructions encoded on a tangible non-transitory computer storage medium for execution by, or to control the operation of, one or more data processing apparatus. The computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, that is generated to encode information for transmission to suitable receiver apparatus for execution by a data processing apparatus.

The term "configured" is used herein in connection with systems and computer program components. For a system of one or more computers to be configured to perform particular operations or actions means that the system has installed thereon software, firmware, hardware, or a combination thereof that cause the system to perform the operations or actions. For one or more computer programs to be configured to perform particular operations or actions means that the one or more programs include instructions that, when executed by one or more data processing apparatus, cause the apparatus to perform the operations or actions.

The term "data processing apparatus" or "data processing system" refers to data processing hardware and encompasses various apparatus, devices, and machines for processing data, including programmable processors, computers, or combinations thereof. The data processing apparatus can include special purpose logic circuitry, such as a field programmable gate array (FPGA) or an application specific integrated circuit (ASIC). The data processing apparatus can include code that creates an execution environment for computer programs, such as code that constitutes processor firmware, a protocol stack, a database management system, an operating system, or combinations thereof.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a standalone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "database" refers to any collection of data. The data can be unstructured or structured in any manner. The data can be stored on one or more storage devices in one or more locations. For example, an index database can include multiple collections of data, each of which may be organized and accessed differently.

The term "engine" refers to a software-based system, subsystem, or process that is programmed to perform one or more specific functions. The engine can be implemented as one or more software modules or components or can be installed on one or more computers in one or more locations. A particular engine can have one or more computers dedicated thereto, or multiple engines can be installed and running on the same computer or computers.

The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers.

A computer or special purpose logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, a personal digital assistant (PDA), a mobile audio or video player, a game console, a Global Positioning System (GPS), or a portable storage device, e.g., a universal serial bus (USB) flash drive, as examples.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Aspects of the disclosure can be implemented in a computing system that includes a back end component, e.g., as a data server, a middleware component, e.g., an application server, or a front end component, e.g., a client computer having a graphical user interface, a web browser, or an app, or any combination thereof. The components of the system can be interconnected by any form or medium of digital data communication, such as a communication network. Examples of communication networks include a local area network (LAN) and a wide area network (WAN), e.g., the Internet.

The computing system can include clients and servers. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Data generated at the client device, e.g., a result of the user interaction, can be received at the server from the client device.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. A system comprising:
one or more processors; and
one or more storage devices coupled to the one or more processors, the one or more processors configured to:
receive an instruction comprising one or more slots;
determine a first operation for a first slot, comprising a first operation code;
determine a second operation for the first slot based on the first operation;
assign the second operation to the first slot by specifying a second operation code corresponding to the second operation; and
encode the instruction with the first operation code and the second operation code.

2. The system of claim 1, wherein the first slot comprises the first operation code and one or more operands related to the first operation.

3. The system of claim 2, wherein the one or more operands related to the first operation are independent of one or more operands related to the second operation.

4. The system of one of claims 1 to 3, wherein the specifying the second operation code comprises adding an additional field for the second operation code to the first slot.

5. The system of one of claims 1 to 4,
wherein the first slot corresponds to an execution unit; and
wherein, optionally, the execution unit executes the first operation and the second operation in parallel.

6. The system of one of claims 1 to 5,
wherein the one or more processors are configured to determine the second operation based on a pairing list of operations; and
wherein, optionally, the pairing list of operations comprises a list of primary operations paired with secondary operations that do not conflict with the primary operations.

7. The system of one of claims 1 to 6, wherein the one or more processors are configured to determine the first slot for executing the first operation and the second operation in parallel.

8. The system of one of claims 1 to 7, wherein the second operation is determined by identifying an execution condition of the second operation.

9. A method for multi-instruction packing, the method comprising:
receiving, by one or more processors, an instruction comprising one or more slots;
determining, by one or more processors, a first operation for a first slot comprising a first operation code;
determining, by one or more processors, a second operation for the first slot based on the first operation;
assigning, by one or more processors, the second operation to the first slot by specifying a second operation code corresponding to the second operation; and
encoding, by one or more processors, the instruction with the first operation code and the second operation code.

10. The method of claim 9,
wherein the first slot comprises the first operation code and one or more operands related to the first operation; and
wherein, optionally, the one or more operands related to the first operation are independent of one or more operands related to the second operation.

11. The method of claim 9 or 10, wherein the specifying the second operation code comprises adding an additional field for the second operation code to the first slot.

12. The method of one of claims 9 to 11,
wherein the first slot corresponds to an execution unit; and
wherein, optionally, the execution unit executes the first operation and the second operation in parallel.

13. The method of one of claims 9 to 12,
wherein the one or more processors are configured to determine the second operation based on a pairing list of operations; and
wherein, optionally, the pairing list of operations comprises a list of primary operations paired with secondary operations that do not conflict with the primary operations.

14. The method of one of claims 9 to 13, wherein the second operation is determined by identifying an execution condition of the second operation.

15. A non-transitory computer readable medium for storing instructions that, when executed by one or more processors, cause the one or more processors to perform operations for multi-instruction packing, the operations comprising:
receiving an instruction comprising one or more slots;
determining a first operation for a first slot comprising a first operation code;
determining a second operation for the first slot based on the first operation;
assigning the second operation to the first slot by specifying a second operation code corresponding to the second operation; and
encoding the instruction with the first operation code and the second operation code.
